# EUROPÄISCHE PATENTANMELDUNG

(11) **EP 2 323 050 A1**
(43) Veröffentlichungstag der Anmeldung: **18.05.2011**
(21) Anmeldenummer: 09013073.3
(22) Anmeldetag: 16.10.2009
(51) Int. Cl.: G06F 17/50

(54) **Computer-implementiertes Verfahren zum Optimieren eines Spritzgussprozesses zur Herstellung dickwandiger Bauteile**

(71) Anmelder: Bayer MaterialScience AG, 51368 Leverkusen (DE)
(72) Erfinder: Dorin, Florian, 50679 Köln (DE); Klinkenberg, Christoph, 50667 Koeln (DE)

(57) **Zusammenfassung**

Es wird ein Computer-implementiertes Verfahren zum Optimieren eines Spritzgussprozesses zur Herstellung dickwandiger Bauteile auf Grundlage eines auf Basis von vorzugebenden Parametern parametrisierten Modells bereitgestellt, wobei ein herzustellendes Bauteil mit einer Bauteil-Geometrie in dem Modell abgebildet wird, und das Verfahren mindestens die folgenden Schritte aufweist:
c) Festlegen einer Gruppe von Parametern als Hauptkenngrößen auf Basis eines relativen Einflusses der Parameter auf eine vorgegebene Modellantwort und
d) Festlegen von Parameterwerten für die Hauptkenngrößen als Startwerte für ein nachfolgendes Optimieren des Modells und von jeweiligen Toleranzbereichen für die Hauptkenngrößen,
c) Optimieren der Parameterwerte der einzelnen Hauptkenngrößen hinsichtlich eines angestrebten Wertes der Modellantwort in den jeweiligen Toleranzbereichen ausgehend von den Startwerten aus Schritt a),
d) Einstellen der optimierten Parameterwerte aus Schritt c) als entsprechende Startparameterwerte an einer Spritzgussmaschine.

## Beschreibung

### Technisches Gebiet

Die Erfindung betrifft ein Computer-implementiertes Verfahren zum Optimieren eines Spritzgussprozesses zur Herstellung dickwandiger Bauteile auf Grundlage eines auf Basis von vorzugebenden Parametern parametrisierten Modells. Ferner betrifft die vorliegende Erfindung ein entsprechendes Computerprogramm, welches bei Ausführung auf einer Recheneinheit das vorgeschlagene Verfahren ausführt. Das erfindungsgemäße Verfahren dient insbesondere zur Produktivitätssteigerung von Thermoplast-Spritzgussprozessen zur Herstellung dickwandiger Bauteile, wie beispielsweise optischer Bauteile

### Beschreibung des Standes der Technik

Optische Linsen aus Thermoplasten oder anderen organischen und anorganischen Kunststoffen, beispielsweise für abbildende oder lichtformende (nicht abbildende) Zwecke, werden zur Zeit im Spritzgussverfahren unter Einbeziehung verschiedener Spritzguss-Sonderverfahren wie beispielsweise Spritzprägen oder dynamische Temperaturführung der entsprechenden Form hergestellt oder entwickelt.

Die optische Leistungsfähigkeit abbildender und nicht-abbildender Linsen hängt unter anderem von der Wanddicke, dem Brechungsindex des verwendeten Materials und der Gestaltung der Linsenoberflächen ab. Häufig werden je nach Einsatzzweck Linsenwanddicken größer als 5, 10 oder 15 mm gefordert, was im Kunststoffspritzguss als "dickwandig" bezeichnet wird.

Kunststoffspritzgussteile mit Wanddicken von mehr als 4 - 5 mm gelten als "dickwandig". Zum einen verlängern große Wanddicken die Zykluszeit erheblich, da die Wanddicke quadratisch in die Kühlzeit eingeht. Zum anderen muss Sorge dafür getragen werden, dass auch in dickwandigen Bereichen der Nachdruck ausreichend lange aufrecht gehalten werden kann, ohne dass die Verbindung zwischen Anschnitt und dickwandigem Bereich (schmelzflüssige Seele) einfriert. Des Weiteren ist es wichtig, dass dick- und dünnwandige Bereiche im Bauteil gleichmäßig gefüllt werden, d.h. dass die Schmelze nicht in dünnwandigen Bereichen auf Grund des höheren Fließwiderstandes stagniert und beginnt einzufrieren.

Das Spritzgießen ist Grundlage für alle anderen Spritzgussprozesse und das am häufigsten verwendete Kunststoffverarbeitungsverfahren überhaupt. Heute ist es üblich, als Spritzgussmaschine eine sogenannte Schneckenkolben-Spritzgießmaschine einzusetzen, die meist Kunststoff in Form eines Granulats aus einem Trichter in Schneckengänge der Maschine einzieht, zerteilt und schert. Eine dadurch entstehende Friktionswärme sorgt in Verbindung mit der von einem beheizten Zylinder zugeführten Wärme für eine relativ homogene Schmelze. Diese Schmelze sammelt sich vor einer Spitze der zurückweichenden Schnecke. In einer sogenannten Einspritzphase wird die Schnecke der Schneckenkolben-Spritzgießmaschine rückseitig hydraulisch oder durch mechanische Kraft unter Druck gesetzt. Dabei wird die Schmelze unter hohem Druck, meist zwischen 500 und 2000 bar, durch eine Rückstromsperre, die an das Spritzgießwerkzeug angedrückte Düse, gegebenenfalls ein Heißkanalsystem und ein Angusskanal in einen formgebenden Hohlraum, eine sogenannte Kavität des temperierten Spritzgießwerkzeugs, gedrückt. Ein reduzierter Druck wirkt als sogenannter Nachdruck noch solange auf die Schmelze, bis die Anbindung, auch Anguss genannt, erstarrt bzw. eingefroren ist. Dadurch wird erreicht, dass eine beim Abkühlen entstehende Volumenschwindung weitestgehend ausgeglichen werden kann. Dies ist für eine Maßhaltigkeit und gewünschte Oberflächenqualität von Bedeutung. Danach beginnt eine Rotation der Schnecke. Auf diese Weise wird die Schussmasse für das folgende Formteil aufbereitet. Während dieser Zeit kann das Formteil im Werkzeug noch abkühlen bis auch das Material im Kern erstarrt ist. Sodann öffnet sich das Werkzeug und wirft das fertige Bauteil aus.

Bei der Zuhaltekraft handelt es sich um diejenige Kraft, die das entsprechende Werkzeug gegen Einspritzen und Nachdrücken zuhält.

Der Hohlraum, die Kavität, des Werkzeugs bestimmt die Form und die Oberflächenstruktur des herzustellenden Bauteils. Bei den Spritzgießparametern spielt auch das Schneckenprofil eine Rolle, wobei es sich bei einer Schnecke um eine eingängige Drei-Zonenschnecke mit Einzugs-, Kompressions- und Austragszone oder um eine Barriereschnecke meist zur Leistungssteigerung oder eine kernprogressive PVC-Schnecke handeln kann.

Zur Simulation eines Spritzgussprozesses werden heute schon oft sogenannte Computer Aided Engineering-Programme, kurz CAE-Programme verwendet. Diese sind jedoch auf entsprechende Füllprozesse fokussiert und nicht auf eine Minimierung von Zykluszeiten oder zur Vorhersage von Bauteilqualitäten. Neben diesen CAE-Programmen gibt es Programme, die in der Lage sind, Simulationsrechnungen zu parametrisieren. Parametrisieren bedeutet hier einerseits eine Veränderung von Randbedingungen, wie beispielsweise Schmelztemperatur, Werkzeugtemperatur, Nachdruck etc. und andererseits eine Änderung von Geometrien. So kann beispielsweise bei einem Multi-Layer-Spritzgussverfahren ein entsprechendes Bauteil in mehrere Schichten aufgeteilt werden, die nacheinander oder parallel gespritzt werden. Näheres hierzu ist der Schrift von Döbler, Protte, Klinkenberg "Freie Fahrt für weißes Licht - LED-Optiken", erschienen in Kunststoffe 04/2009, Seite 83 bis 86, zu entnehmen. Ferner kann auch die Schrift von Stricker, Pillwein, Giessauf "Präzision im Fokus - Spritzgieβen optischer Formteile", erschienen in Kunststoffe 04/2009, Seite 30 bis 34, herangezogen werden. Durch die Möglichkeit einer Parametrisierung können Einflüsse von einzelnen Parametern bspw. auf Kühlzeit und Bauteilqualität untersucht und optimiert werden. Rheologische Simulationen und kommerzielle Optimierer lassen sich zur Zeit nicht hinreichend kombinieren. Andere CAE-Programme, die sich mit Optimierern kombinieren lassen, können zwar ein Temperaturverhalten abbilden, jedoch dies nur bedingt unter Berücksichtigung eines jeweiligen Spritzgussprozesses.

Weiterhin sind diverse Technologien zum Spritzguss optischer Linsen bekannt, was ebenfalls der obengenannten Schrift von Stricker, Pillwein und Giessauf zu entnehmen ist. Eine Optimierung eines Spritzgussprozesses läuft jedoch bislang immer über einen aufwendigen sogenannten "Trial and Error"-Prozess, der in der Regel teuer und langwierig ist.

Als Fertigungstechnologie für dickwandige Linsen bietet sich ein Multi-Layer-(Mehrschicht-) Spritzgießen an. Dabei wird das herzustellende Bauteil schrittweise in mehreren Schichten spritzgegossen. In Abhängigkeit unter anderem von der Wanddickenverteilung, der Anordnung der jeweiligen Schichten, der Reihenfolge der "Teilschüsse" und unterschiedlicher Werkzeugtemperaturen in den einzelnen Kavitäten lassen sich beim Multi-Layer-Spritzgießen im Vergleich zum Single-Layer-Spritzgießen Verbesserungen der Bauteilqualität und gleichzeitig signifikante Verkürzungen der Zykluszeiten erreichen. Eine Verkürzung der Zykluszeiten ist unter anderem darauf zurückzuführen, dass die Wanddicke des herzustellenden Bauteils quadratisch in die Kühlzeitformel eingeht. Hierbei gilt es natürlich zu berücksichtigen, dass das Gesamtpotential einer Wanddickenreduzierung nicht ausgeschöpft werden kann, da für eine zweite Schicht nur in Werkzeugrichtung eine optimale Wärmeabfuhr gegeben ist.

Die zur Erreichung der bei optischen Bauteilen oftmals geforderten hohen Qualitäten notwendigen Zykluszeiten sind in der Regel sehr hoch und liegen insbesondere bei dickwandigen Linsen im Bereich von 5 bis 20 Minuten, teilweise sogar noch darüber. Dies macht derzeit den Einsatz solcher standardmäßig produzierten Linsen in Massenproduktion, wie beispielsweise der Automobilindustrie oder zu anderen Beleuchtungszwecken unter Einsatz von LEDs, unwirtschaftlich.

Daher besteht ein Bedarf an einem Verfahren, mit dessen Hilfe entsprechende Zykluszeiten bei Herstellung von optischen Bauteilen insbesondere nach dem Multi-Layer-Spritzgussverfahren noch weiter reduziert werden können, so dass eine rationale Fertigung auch für Massenmärkte, wie im Falle einer LED-Beleuchtung, möglich wird. Gleichzeitig soll dabei aber auch eine möglichst hohe Qualität der jeweiligen Linse erzielt werden.

### Zusammenfassung der Erfindung

Eine Aufgabe der vorliegenden Erfindung liegt demnach darin, ein Verfahren bereitzustellen, um ein Verfahren zur Herstellung von dickwandigen Bauteilen, insbesondere von dickwandigen optischen Linsen, zu optimieren und ein Spritzgussverfahren für optische Präzisionsbauteile zur Verfügung zu stellen, welches mit gegenüber dem Stand der Technik deutlich verkürzten Zykluszeiten auskommt.

Es wird ein Computer-implementiertes Verfahren zum Optimieren eines Spritzgussprozesses zur Herstellung dickwandiger Bauteile auf Grundlage eines auf Basis von vorzugebenden Parametern parametrisierten Modells vorgeschlagen. Dabei wird ein dickwandiges Bauteil mit einer Bauteil-Geometrie in dem Modell abgebildet. Das vorgeschlagene Verfahren weist mindestens die folgenden Schritte auf:
a) Festlegen einer Gruppe von Parametern als Hauptkenngrößen auf Basis eines relativen Einflusses der Parameter auf eine vorgegebene Modellantwort,
b) Festlegen von Parameterwerten für die Hauptkenngrößen als Startwerte für ein nachfolgendes Optimieren des Modells und von jeweiligen Toleranzbereichen für die Hauptkenngrößen,
c) Optimieren der Parameterwerte der einzelnen Hauptkenngrößen hinsichtlich eines angestrebten Wertes der Modellantwort in den jeweiligen Toleranzbereichen ausgehend von den Startwerten aus Schritt b),
d) Einstellen der optimierten Parameterwerte der einzelnen Hauptkenngrößen aus Schritt c) als entsprechende Startparameterwerte an einer Spritzgussmaschine.

Unter einer Modellantwort ist im Rahmen der vorliegenden Erfindung eine Ergebnisgröße zu verstehen, die sich aus der hier vorliegenden Simulation bzw. des entsprechenden Modells ergibt. Je nach Zielsetzung kann hier eine gewünschte Modellantwort vorgegeben werden, deren Wert dann mit Hilfe des vorgeschlagenen Verfahrens für jeweilige Werte der einzelnen Parameter bestimmt und durch das vorgeschlagene Verfahren letztlich hinsichtlich eines angestrebten Wertes optimiert wird.

Als eine Hauptkenngröße wird im Rahmen der vorliegenden Erfindung ein Parameter bezeichnet, der zu denjenigen Parametern zählt, die einen im Vergleich zu anderen Parametern großen Effekt auf die entsprechende Modellantwort bzw. auf deren Wert hat. Die Anzahl der zu bestimmenden Hauptkenngrößen hängt dabei von einer wahlweisen Bestimmung bzw. einer Defmition des Begriffs "größter Einfluss" auf den jeweiligen Wert einer gewünschten Modellantwort ab.

Gemäß einer möglichen Ausfiihrungsform umfasst das Verfahren ferner, dass vor Durchführung von Schritt a) in einem Schritt al) für die einzelnen Parameter jeweils ein Wert für die vorgegebene Modellantwort bei verschiedenen Parameterwerten des jeweiligen Parameters und ein daraus resultierender relativer Einfluss der einzelnen Parameter auf den Wert für die Modellantwort bestimmt wird, wobei in Schritt a) das Festlegen der Gruppe von Parametern als Hauptkenngrößen auf Basis des so bestimmten relativen Einflusses der einzelnen Parameter erfolgt, und dass in einem Schritt b1) ferner eine Korrelation der Hauptkenngrößen in Bezug auf den Wert für die Modellantwort für verschiedene Parameterwerte der einzelnen Hauptkenngrößen bestimmt wird, wobei dann in Schritt b) die Parameterwerte für die Hauptkenngrößen als Startwerte für das nachfolgende Optimieren des Modells und der jeweiligen Toleranzbereiche für die Hauptkenngrößen auf Basis der so bestimmten Korrelation festgelegt werden.

Vor Durchführung von Schritt a) wird demnach in Schritt al) bei Berechnung des Wertes für die Modellantwort für einen der verschiedenen Parameterwerte eines ersten Parameters dieser Parameterwert in jeweiliger Kombination mit allen verschiedenen Parameterwerten der anderen Parameter in das Modell eingegeben und aus den jeweils resultierenden Werten für die Modellantwort ein Mittelwert gebildet, der dann dem Parameterwert des ersten Parameters als Wert für die Modellantwort zugeordnet wird. Dieses Vorgehen wird für alle weiteren Parameter bzgl. ihrer jeweiligen verschiedenen Parameterwerte durchlaufen. Eine gemeinsame Betrachtung der so erhaltenen jeweiligen Werte für die Modellantwort läßt auf den relativen Einfluss der einzelnen Parameter auf den Wert der Modellantwort schließen. Eine derartige Betrachtung bzw. Auswertung erfolgt bspw. graphisch.

Zwar kann, wie voranstehend beschrieben, der jeweilige relative Einfluss der einzelnen Parameter durch Simulation bestimmt werden, doch kann hinsichtlich des relativen Einflusses auch auf Erfahrungswerte für die einzelnen Parameter zurückgegriffen werden. Gleiches gilt für eine Festlegung der Parameterwerte der Hauptkenngrößen als Startwerte für das nachfolgende Optimieren. Auch hier können Erfahrungswerte herangezogen werden.

In einer möglichen Ausführungsform des vorgeschlagenen Verfahrens umfasst die Bauteil-Geometrie neben einer Gesamtform eine variable Anzahl von Schichten sowie eine jeweilige Dicke dieser Schichten. Die geometrische Form dieser Schichten im Bauteil ist ebenfalls variabel. Eine derartige Struktur ist bspw. bei dem eingangs genannten Muli-Layer-Spritzgussverfahren von Relevanz bzw. ein mit diesem Verfahren hergestelltes Bauteil weist im Allgemeinen eine derartige Struktur auf. Bei derart herzustellenden Bauteilen kann es sich, wie eingangs bereits erwähnt, um optische Linsen handeln.

In einer weiteren möglichen Ausführungsform des vorgeschlagenen Verfahrens entspricht der angestrebte Wert der Modellantwort einem Extremalwert, insbesondere einem Maximum oder Minimum der Modellantwort.

Ferner ist es denkbar, dass nicht nur für die Hauptkenngrößen sondern auch für die verbleibenden Parameter geeignete Startwerte für ein Optimieren des Modells bestimmt werden. Dazu wird bei dem vorgeschlagenen Verfahren, unter Beibehaltung der in Schritt b) ermittelten Startwerte für die Hauptkenngrößen, ferner folgender Schritt vorgesehen:
b2) Bestimmen einer Korrelation der verbleibenden Parameter in Bezug auf den Wert für die Modellantwort für verschiedene Parameterwerte der einzelnen verbleibenden Parameter und daraus Festlegen von Parameterwerten für die verbleibenden Parameter als Startwerte für das nachfolgende Optimieren des Modells und von jeweiligen Toleranzbereichen für die verbleibenden Parameter,
c1) Optimieren der Parameterwerte der verbleibenden Parameter hinsichtlich des angestrebten Wertes der Modellantwort in den jeweiligen Toleranzvereichen ausgehend von den Startwerten aus Schritt b) und b2),
wobei Schritt b2) nach Schritt b) und vor Schritt c) und Schritt c1) zusammen mit Schritt c) auszuführen ist.

Es kann vorgesehen sein, dass das Verfahren ferner folgenden Schritt aufweist:
c2) Bestimmen des Wertes für die Modellantwort für die optimierten Parameterwerte.

In einer möglichen Ausfiihrungsform des erfindungsgemäßen Verfahrens werden die vorzugebenden Parameter ausgewählt aus einer Gruppe bestehend aus Bauteil-Geometrieparametern und aus Spritzgussparametern.

Bei den Bauteil-Geometrieparametern kann es sich dabei um eine Schichtdicke und eine Schichtanzahl des herzustellenden Bauteils handeln.

Bei den Spritzgussparametern handelt es sich im Allgemeinen um Einstellungen an einer entsprechenden Spritzgussmaschine. Dabei kann es sich beispielsweise um Werkzeugtemperaturen, Schmelztemperaturen, Drücke, Kühlzeiten, Einspritzprofil, Umschaltpunkt und Nachdruckprofil handeln. Weitere Parameter können sein: Kühlraten an der Werkzeugwand sowie sonstige thermische Eigenschaften des Werkzeugs.

Dabei ist es möglich, dass die jeweiligen vorzugebenden Parameter in Abhängigkeit einer weiteren Größe wie Temperatur, Zeit oder einer anderen frei wählbaren Feldgröße vorgegeben werden.

Beim Bestimmen des relativen Einflusses der Parameter (mit ihren unterschiedlichen Parameterwerten) auf die Modellantwort werden beim Bestimmen des Wertes für die Modellantwort für einen jeweiligen Parameter gemäß einer Ausfiihrungsform des Verfahrens für die einzelnen Parameter jeweils 1 bis 5 Parameterwerte, insbesondere 2 Parameterwerte, beispielsweise ein Minimal- und ein Maximalwert angegeben. Für diese verschiedenen Parameterwerte eines jeweiligen Parameters wird sodann der Wert für die vorgegebene Modellantwort bestimmt und daraus ein relativer Einfluss des jeweiligen Parameters auf den Wert für die Modellantwort im Vergleich zu den anderen Parametern angegeben. Beim Bestimmen des Wertes für die Modellantwort für einen Parameterwert eines ersten Parameters werden die Parameterwerte der verbleibenden Parameter derart variiert, dass der eine Parameterwert des ersten Parameters mit allen Parameterwerten der anderen Parameter kombiniert, für alle Kombinationen ein jeweiliger Wert der Modellantwort berechnet und aus der Gesamtheit der Werte der Modellantwort ein Mittelwert gebildet wird, der dann dem einen Parameterwert des ersten Parameters als Wert der Modellantwort zugeordnet wird. Gleiches wird durchgeführt für die anderen vorgegebenen Parameterwerte des ersten Parameters sowie jeweils für die verschiedenen Parameterwerte der anderen Parameter. Hat man bspw. nur zwei Parameter A und B und für Parameter A zwei verschiedene Parameterwerte 1 und 2 vorgegeben und für Parameter B zwei verschiedene Parameterwerte 1' und 2', so wird in einer ersten Rechnung Parameter A mit Parameterwert 1 und Parameter B mit Parameterwert 1 ' gerechnet, in einer zweiten Rechnung Parameter A mit Parameterwert 1 und Parameter B mit Parameterwert 2' und zur Bestimmung des relativen Einflusses von Parameter A auf den Wert der Modellantwort wird für Parameterwert 1 der Mittelwert der erhaltenen Werte der Modellantwort aus der ersten und der zweiten Rechnung bestimmt. Entsprechendes wird für Parameterwert 2 durchgeführt. Analog wird vorgegangen für Parameter B und die entsprechenden Parameterwerte 1' und 2'. Dann wird verglichen, wie sich die Änderung von Parameter A, Parameterwert 1 und Parameterwert 2, auf die Modellantwort bzw. deren Wert auswirkt im Vergleich zu einer Änderung von Parameter B, Parameterwert 1'und 2'. An einem Beispiel heißt das: Im Falle von jeweils 2 Parameterwerten für die Parameter A und B ergeben sich für jeden Parameter je zwei Werte für die Modellantwort, folglich, eingetragen in ein x-y-Diagramm, entsprechend je zwei Punkte, nämlich für Parameter A (1, Modellantwort (1)) und (2, Modellantwort (2)) und für Parameter B (1`, Modellantwort (1`)) und (2`, Modellantwort (2`)). Verbindet man für die jeweiligen Parameter die jeweiligen zwei Punkte, so ergibt sich für jeden der zwei Parameter je eine Gerade. Die Steigung der jeweiligen Geraden zeigt den Einfluss des jeweiligen Parameters auf den Wert für die Modellantwort. Je größer der Betrag der Steigung, desto größer der Einfluss.

Die jeweils resultierenden relativen Einflüsse der einzelnen Parameter auf den Wert für die Modellantwort werden verglichen und daraus kann dann eine Gruppe von Parametern als Hauptkenngrößen festgelegt werden. Das bedeutet, dass in der Regel diejenigen Parameter als Hauptkenngrößen festgelegt werden, die vergleichsweise zu den verbleibenden Parametern einen hohen relativen Einfluss auf den Wert der Modellantwort haben.

Für diese sodann festgelegten Hauptkenngrößen kann dann eine Korrelation in Bezug auf den Wert für die Modellantwort anhand von verschiedenen Parameterwerten der einzelnen Hauptkenngrößen bestimmt werden. Das bedeutet, dass die Hauptkenngrößen in diesem Schritt nicht unabhängig voneinander, sondern vielmehr in Kombination und in Wechselbeziehung miteinander betrachtet werden. Dabei ist es möglich, die Abhängigkeiten von je 2 Hauptkenngrößen untereinander zu bestimmen. Es ist denkbar bei einer graphischen Auswertung in einem x-y-Diagramm als abhängige Variable y die Modellantwort, wie bspw. die Zykluszeit, und als unabhängige Variable x eine erste Hauptkenngröße, wie bspw. einen Parameter A, aufzutragen, wobei die Modellantwort dann für verschiedene Parameterwerte, wie bspw. Parameterwert 1 und Parameterwert 2, von Parameter A berechnet wird und die resultierenden Punkte entsprechend im x-y-Diagramm aufgetragen werden. Eine derartige Auftragung wird jeweils für verschiedene Parameterwerte, bspw. Parameterwert 1' und 2', einer zweiten Hauptkenngröße, wie bspw. eines Parameters B, vorgenommen, wodurch sich je nach Anzahl der Parameterwerte für die zweite Hauptkenngröße eine entsprechende Anzahl von Auftragungen bzw. Graphen ergibt, deren Verhalten zueinander Aufschluss über die Korrelation der ersten und zweiten Hauptkenngröße gibt. Verlaufen die Auftragungen im Wesentlichen parallel zueinander, so lässt dies auf eine geringe Korrelation schließen, laufen die Auftragungen nicht parallel, so liegt eine erkennbare Korrelation vor. Anhand einer so ermittelten Korrelation der Hauptkenngrößen in Bezug auf den Wert für die Modellantwort können sodann Parameterwerte für die Hauptkenngrößen festgelegt werden, die als Startwerte für ein nachfolgendes Optimieren des Modells herangezogen werden. Ferner können anhand dieser Korrelationsbestimmung der Hauptkenngrößen untereinander jeweilige Toleranzbereiche für die Hauptkenngrößen abgeleitet werden. Bei der Korrelationsbestimmung werden die Parameterwerte für die verbleibenden, d. h. nicht in die Korrelationsbetrachtung eingehenden Parameter konstant gehalten. Hierbei wird jeweils ein für die Praxis relevanter Wert angenommen. Handelt es sich bspw. bei dem Nachdruck nicht um eine Hauptkenngröße, d.h. soll für diesen ein fester Wert angenommen werden, so wird man diesen Parameterwert sowohl in der Praxis wie dann auch im Modell möglichst niedrig wählen, um Material und Energie zu sparen, d.h. einen Parameterwert, der für Material und Verarbeitungstechnik günstig ist.

Die Korrelation der Hauptkenngrößen kann beispielsweise durch Einführung einer Kovarianz bestimmt werden, die einen Zusammenhang von Hauptkenngrößen in Bezug auf den Wert für die Modellantwort herstellt.

In einer möglichen Ausführungsform des Verfahrens werden als Hauptkenngrößen 1 bis 5 Parameter, beginnend mit dem Parameter mit dem größten relativen Einfluss und bei mehr als einem Parameter fortfahrend mit den hinsichtlich des relativen Einflusses unmittelbar sich anschließenden Parametern, festgelegt. Das bedeutet, dass die fünf Parameter mit dem größten relativen Einfluss auf den Wert der vorgegebenen Modellantwort als Hauptkenngrößen im Allgemeinen herangezogen werden, und deren Korrelation untereinander in Bezug auf den Wert für die Modellantwort bestimmt wird. Es ist dabei möglich, dass beim Bestimmen einer Korrelation der Hauptkenngrößen in Bezug auf den Wert für die Modellantwort für verschiedene Parameterwerte der einzelnen Hauptkenngrößen jeweils 3 bis 10 verschiedene Parameterwerte für die einzelnen Hauptkenngrößen verwendet werden. Es kann dabei vorgesehen werden, dass insgesamt 5 verschiedene Parameterwerte für die einzelnen Hauptkenngrößen eingesetzt werden.

Anhand der Korrelationsbestimmung werden dann Parameterwerte für die Hauptkenngrößen festgelegt, die für ein nachfolgendes Optimieren als Startwerte herangezogen werden. Ferner werden für die jeweiligen Hauptkenngrößen und die festgelegten Parameterwerte jeweilige Toleranzbereiche für die Hauptkenngrößen bestimmt, die ebenfalls Eingang in die nachfolgende Optimierung finden. Als Startwerte können diejenigen Parameterwerte für die Hauptkenngrößen benutzt werden, die zu einem dem angestrebten Wert für die vorgegebene Modellantwort möglichst naheliegenden Wert führen. Unter Beibehaltung der so festgelegten Startwerte für die Hauptkenngrößen können wahlweise auch für die verbleibenden Parameter durch Bestimmung deren Korrelation untereinander in Bezug auf den Wert für die Modellantwort weitere Startwerte für diese Parameter, die dann ebenfalls in eine nachfolgende Optimierung einfließen, festgelegt werden.

Die festgelegten Startwerte werden nun herangezogen, um die Parameter hinsichtlich eines angestrebten Wertes der Modellantwort in den jeweiligen Toleranzbereichen zu optimieren und den sich so ergebenden Wert der Modellantwort zu bestimmen. Eine derartige Optimierung wird in der Regel durch Heranziehen bzw. Nutzung eines kommerziellen Optimierers, wie beispielsweise "HyperStudy^{®}" durchgeführt, wobei die Parameter, insbesondere die Hauptkenngrößen in den festgelegten Toleranzbereichen variiert werden und daraus eine optimale Parameterwerte-Kombination für die einzelnen Hauptkenngrößen ermittelt wird. Die daraus resultierten optimierten Parameterwerte dienen dann als entsprechende Startparameterwerte an einer entsprechenden Spritzgussmaschine zur Herstellung eines entsprechenden Bauteils, insbesondere eines optischen Bauteils.

Nach Festlegung bzw. Einstellung der Startparameterwerte an einer realen Spritzgussmaschine können diese nochmals in Praxisversuchen weiter justiert und optimiert werden.

Mit Hilfe des erfmdungsgemäßen Verfahrens ist es demnach möglich, relative Einflüsse von Parametern auf den Wert einer vorgegebenen Modellantwort eines einen Spritzgussprozess abbildenden parametrisierten Modells schnell und automatisch festzustellen und mit Hilfe einer gezielten Variation der jeweiligen Parameterwerte eine Optimierung des parametrisierten Modells durchzuführen, so dass im Gegensatz zum Stand der Technik nunmehr kein "Trial and Error" Verfahren nötig ist, um letztlich eine Optimierung des entsprechenden Spritzgussprozesses zu erhalten.

In einer möglichen Ausführungsform des vorgeschlagenen Verfahrens wird die Modellantwort aus der Gruppe bestehend aus maximaler Temperatur im herzustellenden Bauteil, Gesamtdauer des Spritzgussprozessess, Dauer bis zum frühestmöglichen Zeitpunkt für eine Entformung, vorgegeben. Das bedeutet, dass beispielsweise, wenn die Modellantwort als eine Dauer bis zum frühestmöglichen Zeitpunkt für eine Entformung vorgegeben wird, in Schritt al)des vorgeschlagenen Verfahrens jeweils ein Wert für die Dauer bis zum frühestmöglichen Zeitpunkt für eine Entformung bei verschiedenen Parameterwerten des jeweiligen Parameters bestimmt wird, was für alle vorzugebenden Parameter gesondert durchgeführt wird, woraus sich für die einzelnen Parameter jeweils ein resultierender relativer Einfluss auf den Wert für die Dauer bis zum frühestmöglichen Zeitpunkt für eine Entformung ergibt. Das heißt, dass davon abzuleiten ist, welche Parameter in einer unabhängig voneinander gemachten Betrachtung einen relativ hohen bzw. niedrigen Einfluss auf die Dauer bis zum frühestmöglichen Zeitpunkt für eine Entformung haben.

Im Falle, dass es gewünscht ist, die Zykluszeiten beim Herstellungsverfahren eines optischen Bauteils unter Verwendung eines Spritzgussprozesses herabzusetzen, ist es wünschenswert, den frühestmöglichen Zeitpunkt für eine Entformung bzw. die Dauer bis zur Erreichung des frühestmöglichen Zeitpunkts für eine Entformung zu minimieren. Mit dieser Vorgabe findet dann der eigentliche Optimierungsschritt c) statt, so dass konkrete Parameterwerte für die Hauptkenngrößen als Startparameterwerte für eine reale Spritzgussmaschine festgelegt werden können.

Bei den vorzugebenden Parametern kann es sich, wie bereits erwähnt, zum einen um Spritzgussparameter handeln, d. h. um Parameter, die mit dem eigentlichen Vorgang des Spritzgießens zusammenhängen. Dies sind beispielsweise Schmelztemperatur des Materials, das zur Herstellung des jeweiligen Bauteils verwendet wird, Werkzeugtemperatur des zum Spritzgie-Ben verwendeten Werkzeugs, Kühlzeit, d. h. wie lange das Werkzeug mitsamt des darin sich befindenden gespritzten Bauteils gekühlt wird und Kühlrate. Ferner zählt zu den Spritzgussparametern der sogenannte Umschaltpunkt, welcher definiert ist durch Einspritzzeit, Einspritzdruck, Schneckenposition, Zuhaltekraft und Volumen. Ferner ist ein Spritzgussparameter das Nachdruckprofil, welches bestimmt wird durch Dauer und Höhe des erforderlichen Nachdrucks und ein Einspritzprofil, welches sich ergibt durch Einspritzzeit, Volumenstrom, Schneckenposition sowie Schneckenvorlaufgeschwindigkeit.

Als Randbedingungen zu beachten sind ferner Materialeigenschaften, wobei diese aber im Wesentlichen als feste Größen anzunehmen sind und in der Regel nicht variiert werden. Bei Materialeigenschaften handelt es sich um die Eigenschaften des Materials, welches zur Herstellung des Bauteils, bspw. des optischen Bauteils, verwendet und demnach in das Spritzgusswerkzeug eingespritzt wird. Zu Materialeigenschaften zählen insbesondere Wärmekapazität, Wärmeleitfähigkeit, Wärmeausdehnung sowie die sogenannte No-Flow-Temperatur. Bei dieser No-Flow-Temperatur handelt es sich um eine Fließgrenztemperatur, für die man annimmt, dass das jeweilige Material, wie bspw. ein verwendeter Kunststoff bei Abkühlung unter diese Temperatur nicht mehr fließt. Diese Fließgrenztemperatur ist eine empirisch ermittelte Größe. Ferner zählt zu den Materialeigenschaften die Übergangstemperatur sowie die Glastemperatur bzw. der Glaspunkt, die Erstarrungstemperatur, die Schmelztemperatur, der sogenannte D3 Koeffizient, der eine Druckabhängigkeit der Viskosität angibt, und ein sogenannter C1/C2 Koeffizient, welcher einen sogenannten Juncture Loss, d. h. einen Einlaufdruckverlust, angibt. Ferner sind Viskosität, Kriechverhalten, E-Modul, Dichte sowie PVT-Daten des einzusetzenden Materials in Betracht zu ziehen. Diese Materialeigenschaften müssen bei der Modellierung wenigstens teilweise, idealer Weise vollständig, mit einbezogen werden. Zwar können die Materialeigenschaften auch parametrisiert und optimiert werden, doch müsste dann das Material entsprechend angepasst werden, was in der Regel eine Materialentwicklung mit sich bringen würde, die auch sicherlich nicht unbedingt eine 100%ige Umsetzung in Richtung der Wunschparameter, d. h. der optimierten Parameterwerte ermöglichen wird. Derartige Anpassungen könnten nur im Rahmen des chemisch und physikalisch Möglichen vorgenommen werden.

Weitere Einflüsse stellen Gravitation, Massenträgheit sowie die Übergangstemperatur Bauteilmaterial/Werkzeug dar. Die Übergangstemperatur Bauteilmaterial/Werkzeug kann derzeit nicht mit ausreichender Genauigkeit gemessen werden, sondern nur über ein sogenanntes Reverse Engineering bestimmt werden. Im Allgemeinen handelt es sich bei dem Bauteilmaterial, d. h. bei dem Material, welches zur Herstellung des Bauteils verwendet wird, um einen Kunststoff.

Neben den oben genannten Parametern fließt auch die Geometrie des herzustellenden Bauteils in das parametrisierte Modell mit ein. Für das herzustellende Bauteil wird eine spezifische Geometrie gewünscht, die wiederum als solche in das Modell in Form von Parametern einfließt. Die Bauteil-Geometrie kann dabei neben der Gesamtform, die in der Regel fest vorgegeben ist, beispielsweise mehrere Schichten umfassen bzw. in mehrere Schichten unterteilt sein sowie variable Trennebenen haben, d. h. variable Schichtdicken. Die Anzahl der Schichten kann variieren.

Eine weitere Besonderheit ist die Tatsache, dass bestimmte Parameter nicht als konkrete Werte vorgegeben werden können, sondern in Abhängigkeit von beispielsweise der Temperatur oder der Zeit oder einer weiteren frei wählbaren Variablen anzugeben sind.

Auf Grundlage der vorgegebenen Parameter wird zunächst das Modell entsprechend parametrisiert, auf Grundlage dessen letztlich der zugrunde liegende Spritzgussprozess optimiert werden soll. Nach Parametrisierung des Modells wird dieses Modell zunächst validiert, d. h. dessen Gültigkeit mit realen Werten überprüft. Das wird in der Regel nur einmal gemacht.

Ferner wird dann für jede Geometrie (für den Fall, dass bei verschiedenen Geometrien unterschiedliche Schichtzahlen vorliegen) eine Testrechnung durchgeführt und im Anschluss daran mit einem Postprozessor eine Art Makro aufgezeichnet, mit dem im weiteren Verlauf alle weiteren Rechnungen auf die gleiche Art und Weise ausgewertet werden können. Der Postprozessor ist dabei ein Programm zur Auswertung von Simulationsergebnissen. Ist das Modell validiert, d. h. spiegelt das Modell ein reales Verhalten wieder, wird das nunmehr parametrisierte Modell in das vorgeschlagene Computer-implementierte Verfahren aufgenommen, so dass die vorgeschlagenen Verfahrensschritte auf Grundlage des parametrisierten Modells entsprechend durchgeführt werden können. Für das durchzuführende Verfahren werden zunächst die Parameter vorgegeben, die bei dem zugrundeliegenden parametrisierten Modell zu variieren sind. Dabei kann es sich zum einen sowohl um die Bauteilgeometrie, wie auch um die zuvor genannten Parameter handeln, die die Spritzgussparameter, ggf. auch die Materialeigenschaften und weitere physikalische Parameter mit einschließen.

Ferner wird vor Beginn der Durchführung des vorgeschlagenen Verfahrens eine Modellantwort vorgegeben, hinsichtlich welcher der Spritzgussprozess optimiert werden soll. Beispiele für Modellantworten sind:
- Maximale Temperatur im herzustellenden Bauteil;
- Gesamte Spritzgussprozesszeit;
- Dauer bis eine jeweilige Entformungstemperatur erreicht ist.

Die Dauer bis zur Erreichung der Entformungstemperatur bestimmt unmittelbar die bei dem Spritzgussprozess herrschenden Zyklusraten, die beispielsweise bei Optimierung des Spritzgussprozesses zu minimieren bzw. möglichst niedrig zu halten sind. Das bedeutet, dass es beispielsweise ein Ziel sein kann, den frühestmöglichen Zeitpunkt für eine Entformung bzw. die Dauer zur Erreichung dieses Zeitpunkts zu minimieren.

Allerdings gestaltet es sich bei Bestimmung von Entformungszeiten in der Regel nicht allzu einfach, da bspw. bei einem Multi-Layer-Spritzgussverfahren das herzustellende Bauteil nicht in einem Zuge, und einer damit verbundenen Entformungszeit gespritzt wird, sondern vielmehr erst eine erste Schicht, ein sogenannter Vorspritzling, gespritzt und gekühlt wird, bis dessen Entformungstemperatur erreicht ist. Erst dann bzw. genau dann wird das Werkzeug geöffnet und der Vorspritzling beispielsweise mit Hilfe eines Drehtellers, einer Indexplatte, eines Schiebetisches oder eines Roboters in eine nächste Kavität desselben Werkzeugs gebracht. Dort wird eine zweite Schicht über den Vorspritzling gespritzt. Denkbar ist auch die Verwendung von zwei oder mehr voneinander unabhängigen Spritzgussmaschinen und -werkzeugen. Dabei kann jede Maschine für das Spritzen einer Schicht zuständig sein, der Transfer der Spritzlinge zwischen den Maschinen erfolgt mit geeigneten Mitteln. In dem vorgeschlagenen Computer-implementierten Verfahren ist jedoch im Vorfeld nicht bekannt, wie lange es dauert, bis eine Entformungstemperatur eines herzustellenden Bauteils erreicht ist. Dies muss zunächst in einer ersten Rechnung ermittelt werden. Hierzu stellt man eine deutlich längere Kühlzeit ein als nötig und kontrolliert, zu welchem Zeitpunkt die jeweilige Kühltemperatur bzw. Entformungstemperatur erreicht worden ist. Dies kann in Simulationen aber auch über ein Abbruchkriterium automatisch eingestellt werden, d. h. es wird genau so lange simuliert, bis die Entformungstemperatur überall unterschritten worden ist. Der ermittelte Wert wird dann nochmals verwendet, um die erste Schicht, d. h. den Vorspritzling, zu berechnen, nämlich genau bis zur Zeit der zuvor ermittelten Entformungstemperatur. Bei Berechnung der Simulation des Vorspritzlings wird auch ein entsprechendes Temperaturprofil ermittelt. Sodann wird die zweite Schicht simuliert. Bei Berechnung der zweiten Schicht wird ebenfalls wieder zunächst die Dauer zur Erreichung der Entformungstemperatur für die nunmehr zwei Schichten in Kombination berechnet. Hierbei kann das bestimmte Temperaturprofil des Vorspritzlings unterstützend eingesetzt werden. Ferner kann auch das Abkühlverhalten zwischen den einzelnen Schritten mit simuliert werden, wenn z.B. der Vorspritzling lange zwischengelagert wird, oder es ein paar Minuten dauert, ehe der Vorspritzling überspritzt wird, oder es auch nur ein paar Sekunden dauert, ehe der Vorspritzling hinterspritzt wird. Das beschriebene Vorgehen kann mit Hilfe von Skripten und Makros automatisiert ablaufen, wobei dann nur eine einmalige Eingabe notwendig ist. Dabei gibt es ein Skript, dass folgendes ausführt: 1. Rechnung starten, nach Beendigung der Rechnung, ein zweites Skript zur Auswertung der Entformungszeit Vorspritzling starten und Eintragung in ein weiteres Rechendeck, 2. Rechnung starten und auch hier wieder nach Beendigung der Rechnung ein zweites Skript starten, dass die Ergebnisse auswertet und die Entformungszeit ausgibt. Das zweite Skript (zur Bestimmung Entformungszeit 1) lädt ein Makro, in dem die Rechnung ausgewertet wird und den Temperaturverlauf über der Zeit als tabellarische Wertepaare ausgibt. In einem Zusatz-Skript wird aus der Tabelle extrahiert, ab wann die Entformungstemperatur unterschritten worden ist. Hier wird dann zwischen den zwei Punkten (unmittelbar vor Entformunstemperatur und unmittelbar nach Entformungstemperatur) auf die Entformungstemperatur interpoliert, so dass die Bestimmung der Zeit noch genauer erfolgt (denn in der Rechnung wird höchstens durch Zufall die Entformungstemperatur genau erreicht, hier sind Abweichungen von 1-2°C die Regel.) Die hieraus gewonnene Zeit wird in eine neue Datei ausgegeben, die dann in einem weiteren Unterskript in das zweite Modell (bei dem auch der Nachspritzling mitberechnet wird) integriert wird. Für die Rechnung und das Skripting des Nachspritzlings laufen dann analoge Skripts (außer dass die Endzeit dann nicht wieder in ein Rechenmodell integriert wird).

Das bedeutet, dass in dem Falle, wie hier beschrieben, es nötig ist, eine sukzessive Ermittlung der Entformungszeit, d.h. der Dauer bis zur Erreichung der Entformungstemperatur, vorzusehen, einhergehend mit einer wiederholten Durchführung des vorgeschlagenen Verfahrens für jede der beiden Schichten, um einen minimalen Wert für eine Gesamtdauer der benötigten Kühlzeit zu ermitteln.

In einer weiteren möglichen Ausführungsform des vorgeschlagenen Verfahrens wird das in Schritt al) durchgeführte Bestimmen des jeweiligen relativen Einflusses der einzelnen Parameter auf den Wert für die Modellantwort durch eine graphische Auswertung durchgeführt. Das bedeutet beispielsweise, dass, falls alle sich ergebenden Werte für die vorgegebene Modellantwort für einen Parameter bei verschiedenen Werten dieses Parameters auf einer Gerade liegen, die Steigung der Geraden darüber Auskunft geben kann, wie groß der relative Einfluss des entsprechenden Parameters auf den Wert für die Modellantwort ist. Beispielsweise kann der relative Einfluss umso größer sein, je größer die Steigung der Geraden ist, auf welcher die Werte für die Modellantwort bei den verschiedenen Parameterwerten des jeweiligen Parameters liegen. Die graphische Auswertung erfolgt, um die Einflüsse der Parameter festzustellen. Wie in den vorherigen Absätzen beschrieben, werden dabei zuerst alle Parameter mit allen Parameterwerten untereinander variiert. Daher ist eine hier beschriebene graphische Auswertung sinnvoll. Die Parameter können auch einen kurvenförmigen Verlauf haben, dann kann man z.B. auch Tendenzen, Minima/Maxima oder einen Verlauf gegen einen Grenzwert ablesen.

Auf Grundlage dieser Auswertung werden dann 1 bis 5, vorzugsweise 2 bis 3, Parameter als Hauptkenngrößen bestimmt. Dies sind vorzugsweise diejenigen Parameter mit dem größten relativen Einfluss. Gemäß einer möglichen Ausführungsform wird in einem weiteren Schritt dann deren Korrelation untereinander in Bezug auf den Wert für die Modellantwort untersucht. Dabei werden die Parameterwerte der nicht als Hauptkenngrößen identifizierten Parameter konstant gehalten.

Während die Anzahl der Hauptkenngrößen in der Regel geringer ist als die Gesamtzahl der in das Modell einfließenden Parameter, wird die Anzahl der Parameterwerte, die zur Bestimmung der Korrelation der Hauptkenngrößen untereinander herangezogen werden, gegenüber dem optional vorgesehenen vorangehenden Schritt al) gemäß welchem für die einzelnen Parameter jeweils ein Wert für die vorgegebene Modellantwort bei verschiedenen Parameterwerten des jeweiligen Parameters bestimmt werden, erhöht. Das bedeutet beispielsweise, wenn der Parameter "Kühlzeit" einen großen relativen Einfluss auf den Wert der vorgegebenen Modellantwort hat und in dem optional vorgesehenen Schritt al) für den Parameter "Kühlzeit" Parameterwerte 50 Sekunden und 500 Sekunden gewählt werden, so wird in Schritt a) zunächst der Parameter "Kühlzeit", nachdem sich herausgestellt hat, dass dieser Parameter einen großen Einfluss hat, zur Gruppe der Hauptkenngrößen gezählt und dann in Schritt b1) bei Bestimmung der Korrelation der Hauptkenngrößen untereinander in Bezug auf den Wert für die Modellantwort für den Parameter "Kühlzeit" mehr Parameterwerte herangezogen, wie beispielsweise Werte 50, 100, 200, 300, 400, 500 Sekunden. Für einen Parameter "Werkzeugtemperatur", der nach Durchführung von dem Schritt a) vorangehenden Schritt al) des Verfahrens nur einen kleinen relativen Einfluss auf den Wert der vorgegebenen Modellantwort zeigt, und dabei für diesen Parameter Parameterwerte von 60° C und 120° C angenommen wurden, und der in Schritt a) nicht zur Gruppe von Parametern, die als Hauptkenngrößen festgelegt werden, gezählt wird, wird bei Bestimmung der Korrelation in Schritt b1) nur ein konstanter Wert, wie beispielsweise 60° C angenommen.

Anhand der Ergebnisse aus Schritt b1) des vorgeschlagenen Verfahrens können Erkenntnisse darüber gewonnen werden, wie die Hauptkenngrößen voneinander abhängen und bei welchen Konstellationen, d.h. bei welchen Parameterwerten der einzelnen Hauptkenngrößen die besten Ergebnisse hinsichtlich des Werts für die Modellantwort erzielt werden können. Diese Konstellationen der Hauptkenngrößen können dann als Startwerte für ein nachfolgendes Optimieren des Modells hinsichtlich eines angestrebten Wertes für die vorgegebene Modellantwort herangezogen werden. Ferner können davon jeweilige Toleranzbereiche für die Hauptkenngrößen abgeleitet werden.

In dem eigentlichen Optimierungsschritt werden die Parameterwerte der Hauptkenngrößen in den jeweiligen Toleranzbereichen ausgehend von den Startwerten und letztlich der sich dabei ergebende Wert für die Modellantwort bestimmt. Handelt es sich bei der Modellantwort beispielsweise um die Dauer zum Erreichen des frühestmöglichen Zeitpunkts für eine Entformung und ist der angestrebte Wert ein Minimum, so erhält man hier zum einen einen konkreten Wert für diese Zeitdauer, der einem Minimum entspricht, oder zumindest diesem möglichst nahe kommt und zum anderen optimierte Parameterwerte für die Hauptkenngrößen, die zu diesem Wert führen. Die so ermittelten Parameterwerte für die Hauptkenngrößen können wiederum als entsprechende Startparameterwerte an einer realen Spritzgussmaschine eingestellt werden, so dass der letztlich durchgeführte reale Spritzgussprozess auf Basis dieser optimierten Parameterwerte durchgeführt werden kann.

Es besteht ferner die Möglichkeit, aus der Gesamtheit der vorzugebenden Parameter weitere Parameter festzulegen, für welche ebenfalls eine Korrelation in Bezug auf den Wert für die Modellantwort bestimmt werden soll, auch wenn diese Parameter nicht einen so hohen relativen Einfluss auf den Wert für die Modellantwort haben, wie die vormals ermittelten Hauptkenngrößen. Durch diese Vorgehensweise erhält man auch für diese weniger einflussreichen Parameter Startwerte für eine durchzuführende Optimierung des Modells. Dabei werden die ermittelten Startwerte für die Hauptkenngrößen konstant gehalten.

Bei Festlegung von jeweiligen Toleranzbereichen für die Hauptkenngrößen ist zu beachten, dass es Randbedingungen gibt, die erfüllt sein müssen, d. h. nicht beliebig variiert werden können. Derartige Bedingungen werden in der Regel als Zahlenwerte angegeben, die mit < =, = und > = definiert werden und sich konkret auf die vorzugebende Modellantwort beziehen. Als Optimierungsziel wird in der Regel nur ein einziges definiert, welches sich auf den gewünschten bzw. angestrebten Wert für eine vorzugebende Modellantwort bezieht. Wählt man beispielsweise als Modellantwort die "Zykluszeit", so wäre ein anzustrebender Wert für die "Zykluszeit" ein Minimum. Im Falle der Modellantwort "Qualitätskenngröße" muss zunächst ein Mindestwert erfüllt werden. Dies wird dann über eine entsprechende Randbedingung gewährleistet. Es wird zunächst solange optimiert, bis alle Randbedingungen erfüllt werden und erst dann wird hinsichtlich des Optimierungsziels bzw. des angestrebten Werts der Modellantwort optimiert.

Einzuhaltende Randbedingungen können ferner bspw. durch Materialeigenschaften des für den Spritzguss eingesetzten Materials gegeben sein. Bei den Materialeigenschaften sind insbesondere Wärmekapazität, Wärmeleitfähigkeit, Wärmeausdehnung, Glaspunkt, Erstarrungstemperatur, Schmelztemperatur, Viskosität und Dichte zu betrachten. Die Materialeigenschaften beziehen sich dabei auf das zur Herstellung des jeweiligen Bauteils zu verwendende Material.

Nach Festlegung der Startwerte für eine durchzuführende Optimierung und der jeweiligen Toleranzbereiche für die entsprechenden Hauptkenngrößen unter Berücksichtigung der einzuhaltenden Randbedingungen wird die Optimierung, d. h. Schritt c) des vorgeschlagenen Verfahrens durchgeführt. Dabei werden automatisch Simulationsmodelle für die Parameterwerte in den jeweiligen Toleranzbereichen berechnet und die Werte für die Modellantwort ermittelt. Die erhaltenen Werte für die Modellantwort werden sodann unter Berücksichtigung von einzuhaltenden Randbedingungen und des angestrebten Werts für die Modellantwort ausgewertet, wobei die konkret erhaltenen Ergebnisse untereinander verglichen und damit die zugrundeliegenden Parameterwerte der Hauptkenngrößen optimiert werden. Ist das Optimierungsziel erreicht bzw. treten keine signifikanten Änderungen mehr ein, und sind alle Randbedingungen erfüllt wird die Optimierung beendet und es wird angegeben, welche Parameterwerte der Hauptkenngrößen zu diesem optimalen Ergebnis geführt haben. Diese Parameterwerte sind dann zur Durchführung eines realen Verfahrens auf einer entsprechenden Spritzgussmaschine heranzuziehen.

Im Realfall müssen an der realen Spritzgussmaschine später in der Regel noch Prozessoptimierungen durchgeführt werden, die jedoch erheblich weniger aufwendig sind als ohne die vorher durchgeführte Optimierung. Das vorgeschlagene Verfahren ist zielgerichtet und ein ,,Trial und Error" Verfahren ist nicht mehr nötig.

Dadurch kann ein Schritt zur Nachbearbeitung nach ersten Spritzgussversuchen signifikant reduziert werden. Eine Anzahl von Schleifen wird durch die optimierte Einstellung von Parametern an einer Spritzgussmaschine im Vorfeld minimiert. Die Zykluszeit kann basierend auf messbaren Größen minimiert werden. Temperaturmessungen im Inneren eines Bauteils sind im Stand der Technik nicht möglich. Durch das vorgeschlagene Verfahren sind solche Messungen zwar auch nicht möglich, jedoch ist es möglich, eine Temperaturverteilung in einem herzustellenden Bauteil zu simulieren und damit zu ermitteln. Diese Temperaturverteilung kann durch Praxis-Versuche mit Temperaturfühlern im realen Werkzeug nachgestellt und die Genauigkeit der quantitativen Temperaturverteilung erhöht werden. Das entspricht dann einer Validierung der Rechenmodelle. Die Messung ist dann zwar auch noch immer nicht eine Messung der Temperatur im Kern (denn ein Temperaturfühler führt auch Wärme ab), aber wenn der Temperaturfühler mit modelliert wird und die Messungen im Experiment mit dem Temperaturverlauf bei der Simulation übereinstimmt, ist das Modell korrekt. Erst ein Wissen über die Temperaturverteilung im Bauteil ermöglicht eine tatsächliche Optimierung der Zykluszeiten und des zugrundeliegenden Spritzgussprozesses. Dies ist nur mit Hilfe des vorgeschlagenen Verfahrens möglich. Mittels des vorgeschlagenen Verfahrens kann nicht nur Aufschluss über die Temperaturverteilung erzielt werden, sondern auch Auskunft über Eigenspannung, resultierende Verformung usw. gegeben werden. Auf diese Weise kann auch eine Qualität eines herzustellenden Bauteils in Abhängigkeit von Bauteil-Geometrie und Spritzgießbedingungen im Vorfeld bestimmt und optimiert werden.

Das vorgeschlagene Verfahren zur Optimierung eines Spritzgussprozesses zur Herstellung dickwandiger Bauteile wird auf Grundlage eines parametrisierten Modells durchgeführt. Diesem Modell kann wiederum eine Standardspritzgussmaschine mit bspw. einem Zweikavitäten-Spritzgusswerkzeug zugrundegelegt werden. Eine derartige Standardspritzgussmaschine mit einem Zweikavitäten-Spritzgusswerkzeug bietet bspw. die Möglichkeit, ein plattenförmiges optisches Bauteil mit 50 x 50 x 20 mm Kantenlänge und hochglanzpolierten Oberflächen in drei Schichten zu spritzen, wobei der Vorspritzling bspw. wahlweise Wanddicken von 30, 50 und 70 % einer Gesamtwanddicke von 20 mm aufweist.

Als Materialien für optische Bauteile kommen alle thermoplastisch verarbeitbaren Kunststoffe in Frage, beispielsweise Polycarbonat (PC), Polyester, insbesondere Polybutylenterephthalat (PBT) oder Polyethylenterephthalat (PET), Polyamid (PA), Polyethylen (PE), Polypropylen (PP), Polystyrol (PS), Poly(Acrylnitril-Co-Butadien-Co-Styrol) (ABS), Poly(Acrylnitril-Co-Styrol-Co-Acrylester) (ASA), Poly(Styrol-Co-Acrylnitril) (SAN), Polyoxymethylen (POM), cyclische Polyolefine (COC), Polyphenylenoxid (PPO), Polymethylmethacrylat (PMMA), Polyphenylensulfid (PPS), Polyvinylchlorid (PVC) und deren Blends.

Eine Bauteil-Geometrie eines herzustellenden optischen Bauteils, wie bspw. einer optischen Linse, kann beispielsweise eine Wanddicke von mehr als 5 mm, vorzugsweise mehr als 10 mm, und Kantenlängen von 5 bis mehrere 100 mm vorsehen.

Das Spritzen eines optischen Bauteils nach dem zu optimierenden Spritzgussprozess kann nach einem Multi-Layer-Spritzgussverfahren aus einem thermoplastischen Kunststoff erfolgen. Das Spritzgussverfahren ist aus dem Stand der Technik hinlänglich bekannt. Hierzu wird verwiesen auf ein Dokument von Döbler, Protte, Klinkenberg ,,Freie Fahrt für weißes Licht LED-Optiken", erschienen in Kunststoffe 04/2009, Seite 83 - 86. Durch das vorgeschlagene Verfahren zur Optimierung eines zugrundeliegenden Spritzgussprozesses zur Herstellung dickwandiger Bauteile, insbesondere optischer Bauteile, wird erreicht, dass bspw. eine Entformung eines herzustellenden optischen Bauteils nicht mehr anhand von Daumenwerten und Messergebnissen abgeschätzt werden muss, sondern dass Temperaturverläufe und Abkühlvorgänge im Inneren des herzustellenden Bauteils sichtbar gemacht und damit wesentlich besser verstanden werden können.

Mit Hilfe des vorgeschlagenen Verfahrens ist es möglich, eine Zykluszeit für einen Spritzgussprozess zu kürzen, da die Dauer zur Erreichung des frühestmöglichen Zeitpunkts für eine Entformung des optischen Bauteils mittels des Verfahrens minimiert werden kann, indem für dem Modell zugrundliegende Parameter Werte festgelegt werden können, für welche die Dauer zur Erreichung des frühestmöglichen Zeitpunkts für die Entformung ein Minimum erreicht. Diese Dauer hängt unmittelbar zusammen mit der Zykluszeit bzw. der Zyklusrate des Spritzgussprozesses, was insbesondere bei einer Massenproduktion von hoher Bedeutung ist.

Ferner wird durch die vorliegende Offenbarung auch ein Computerprogramm mit Programmcode abgedeckt, der dazu geeignet ist, ein erfmdungsgemäßes Verfahren auszuführen, wenn das Computerprogramm auf einer entsprechenden Recheneinheit abläuft. Es werden sowohl das Computerprogramm selbst als auch abgespeichert auf einem computerlesbaren Medium (Computerprogrammprodukt) beansprucht.

Zur Durchführung des vorgeschlagenen Computer-implementierten Verfahrens kann aus dem Stand der Technik bekannte Software angewendet werden. Beispielsweise kann das Softwarepaket ,,HyperWorks^{®} der Firma Altair Anwendung finden. Dieses beinhaltet Programme zum Postprocessing (HyperView^{®}, HyperGraph^{®}) und Optimierungcodes (HyperStudy^{®}, HyperOpt^{®}). Das Programm HyperView^{®} kann bspw. zur Analyse von Temperaturen und HyperStudy^{®} zur Steuerung der automatisierten Optimierungen verwendet werden. Mit dem Programm HyperStudy^{®} können neben dem Optimierungsschritt auch die dem Optimierungsschritt vorangehenden Schritte des vorgeschlagenen Verfahrens durchgeführt werden. Zur Erstellung des parametrisierten Modells auf Grundlage dessen das vorgeschlagene Verfahren durchgeführt wird, kann ebenfalls eine aus dem Stand der Technik bekannte Software verwendet werden, welche geeignet ist, eine Simulation für einen Spritzgussprozess, um Spritzgussparameter mit einzubeziehen, durchgeführt werden. Dabei kann beispielsweise die Software Moldflow^{®} eingesetzt werden. Ferner gibt es weitere Programme, die zur Ermittlung eines rheologischen Verhaltens geeignet sind, wie beispielsweise CADMould^{®}. Diese Programme basieren mathematisch auf einem Euler'schen Ansatz.

Das Softwarepaket HyperWorks^{®} der Firma Altair umfasst mehrere selbstständige Module, die durch Dateiaustausch miteinander kombiniert werden können. Demnach ist auch ein Einsatz einzelner Module möglich. Im Rahmen des vorgeschlagenen Verfahrens können dabei insbesondere, wie bereits erwähnt, HyperView^{®} und HyperStudy^{®} sowie HyperGraph^{®} und HyperOpt^{®} eingesetzt werden. HyperView^{®} ist ein FE- und MKS-Postprozessor. HyperStudy^{®} ist ein solverunabhängiges Optimierungswerkzeug. HyperGraph^{®} dient zur Erstellung von Graphen aus den durchgeführten Berechnungen, das Modul HyperView^{®} ist ein grafischer Postprocessor, der die Verteilung von Ergebnisgrößen im Bauteil wie z.B. Spannungen, Drehungen und Verformungen als sog. Konturplot wiedergeben kann.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

### Kurzbeschreibung der Zeichnung

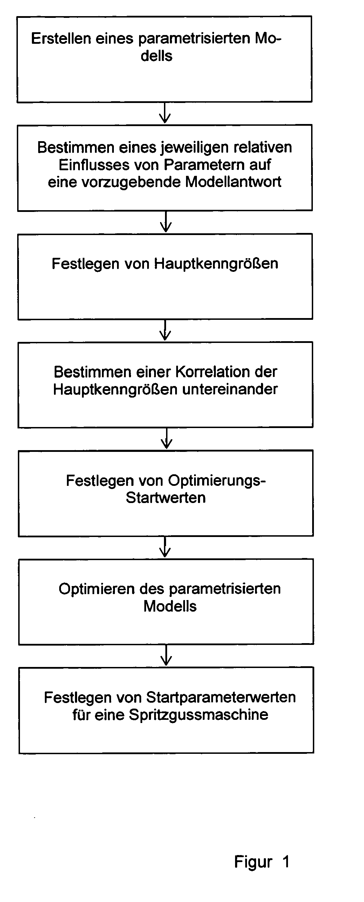

Figur 1 zeigt in schematischer Darstellung in Form eines Flussdiagrammes den Ablauf einer möglichen Ausführungsform des vorgeschlagenen Verfahrens zum Optimieren eines Spritzgussprozesses zur Herstellung dickwandiger Bauteile, insbesondere optischer Bauteile.

### Ausführliche Beschreibung

Figur 1 zeigt ein Flussdiagramm von einer Ausführungsform des vorgeschlagenen Computer-implementierten Verfahrens zum Optimieren eines Spritzgussprozesses zur Herstellung dickwandiger Bauteile, insbesondere optischer Bauteile auf Grundlage eines auf Basis von vorzugebenden Parametern parametrisierten Modells.

Dabei wird in einem ersten Schritt zunächst das parametrisierte Modell erstellt, auf Grundlage dessen der Spritzgussprozess optimiert wird. Das parametrisierte Modell basiert auf vorzugebenden Parametern. Diese Parameter sind zunächst auszuwählen aus den Parametern, die bei dem jeweiligen Spritzgussprozess einfließen und Einfluss auf den Spritzgussprozess nehmen. Zum einen sind dies Parameter, die bei einer Bauteil-Geometrie des herzustellenden Bauteils einfließen, wie beispielsweise eine Anzahl von Schichten und eine Schichtdicke des herzustellenden Bauteils, bei welchem es sich beispielsweise um eine optische Linse handeln kann. Neben Materialeigenschaften sind sogenannte Spritzgussparameter zu beachten, die den Spritzgussprozess direkt oder mittelbar beeinflussen. Dazu zählen unter anderem Schmelztemperaturen, Werkzeugtemperaturen, Kühlzeiten, Kühlraten, ein sogenannter Umschaltpunkt, ein Nachdruckprofil und ein Einspritzprofil. Der sogenannte Umschaltpunkt wird definiert durch Einspritzzeit, Einspritzdruck, Schneckenposition, Zuhaltekraft und Volumen. Das Einspritzprofil wird definiert durch Einspritzzeit, Volumenstrom, Schneckenposition und Schneckenvorlaufgeschwindigkeit.

Nach Vorgabe dieser Parameter wird das Modell erstellt, wozu eine Software aus dem Stand der Technik verwendet werden kann. Hierzu kann man beispielsweise die bereits erwähnte Software Moldflow^{®} verwenden. Ferner ist es auch möglich, andere Programme wie beispielsweise CADMould^{®} einzusetzen. Die Rechencodes und mathematischen Ansätze dieser Programme basieren mathematisch auf einem Euler'schen Ansatz. Für eine Simulation für Festphasen und auch für Flüssigphasen kann ferner ein Programm namens Abaqus^{®} der Firma Dassault Systems verwendet werden. Dabei handelt es sich um ein FE-Programm, bei welchem der implizierte Solver verwendet werden kann. Weitere Programme, die eingesetzt werden können, sind beispielsweise Ansys^{®} und Radioss^{®}. Diese Software wird vorzugsweise verwendet, da sie auf ASCII formatierten Daten basiert und sich somit mit einem weiteren im folgenden zur Optimierung verwendeten Programm namens HyperWorks^{®} gut kombinieren lässt.

Nach Erstellen des parametrisierten Modells, was einem Simulationsmodell entspricht, wird nun zunächst gemäß der hier beschriebenen Ausführungsform des Verfahrens für die einzelnen Parameter jeweils ein Wert für eine vorzugebende Modellantwort bei verschiedenen Parameterwerten des jeweiligen Parameters bestimmt. Daraus lässt sich ein relativer Einfluss der einzelnen Parameter auf den Wert für die Modellantwort bestimmen. Bei der Modellantwort kann es sich beispielsweise um eine maximale Temperatur im Bauteil, eine Gesamtdauer des Spritzgussprozesses oder um eine Dauer bis zum Erreichen des frühestmöglichen Zeitpunkts für eine Entformung handeln.

Nach Bestimmung bzw. auf Grundlage der resultierenden relativen Einflüsse der einzelnen Parameter auf den Wert für die Modellantwort wird eine Gruppe von Parametern als Hauptkenngrößen festgelegt. In einem folgenden Schritt wird sodann eine Korrelation der Hauptkenngrößen in Bezug auf den Wert für die Modellantwort für verschiedene Parameterwerte der einzelnen Hauptkenngrößen bestimmt. Anhand der somit festgestellten Korrelation der Hauptkenngrößen werden Parameterwerte für die Hauptkenngrößen als Startwerte für ein nachfolgendes Optimieren des Modells festgelegt. Ferner werden jeweilige Toleranzbereiche für die Hauptkenngrößen bestimmt. All diese Schritte können durch Simulation erfolgen. Jedoch können auch die für den nächsten Schritt wichtigen Ergebnisse auf Erfahrungswerten beruhen.

In einem Nachfolgeschritt werden schließlich die Parameterwerte der Hauptkenngrößen hinsichtlich eines angestrebten Wertes der Modellantwort in den jeweiligen Toleranzbereichen optimiert. Bei dem angestrebten Wert der Modellantwort kann es sich in Abhängigkeit von der Modellantwort beispielsweise um ein Maximum oder ein Minimum der Modellantwort handeln. Handelt es sich bei der Modellantwort beispielsweise um die Dauer des Spritzgussprozesses, so ist beispielsweise der angestrebte Wert im Allgemeinen ein Minimum der Gesamtdauer des Spritzgussprozesses. Handelt es sich bei der Modellantwort um die Dauer bis zur Erreichung des frühestmöglichen Zeitpunkts für eine Entformung des herzustellenden Bauteils, so wird es sich zur Herabsetzung der Zykluszeiten bei dem angestrebten Wert der Modellantwort ebenfalls um ein Minimum der Modellantwort handeln, was bedeutet, dass die Dauer zur Erreichung des frühestmöglichen Zeitpunkts zur Entformung möglichst kurz ist.

Ferner spielen Materialeigenschaften des zum Spritzgießen verwendeten Materials im Hinblick auf einzuhaltende Randbedingungen eine Rolle. Zu Materialeigenschaften zählen unter anderem Wärmekapazität, Wärmeleitfähigkeit, Wärmeausdehnung und eine sogenannte No-Flow-Temperatur, was einer Fließgrenztemperatur entspricht, für die man annimmt, dass das verwendete Material, insbesondere ein Kunststoff, bei Abkühlung unter diese Temperatur nicht mehr fließt. Ferner zählen zu Materialeigenschaften Übergangstemperatur, Glastemperatur, Erstarrungstemperatur, Schmelztemperatur, D3-Koeffizient, welcher eine Druckabhängigkeit der Viskosität angibt, C1/C2-Koeffizient, Viskosität, Kriechverhalten, E-Modul, Dichte und PVT-Daten des eingesetzten Materials.

Generell muss es sich aber nicht zwingend um einen Extremalwert der Modellantwort handeln, welcher angestrebt wird. Entspricht die Modellantwort beispielsweise einer maximalen Temperatur im Kern des herzustellenden Bauteils, so kann der angestrebte Wert der Modellantwort beispielsweise die Glastemperatur sein, bei der bzw. unterhalb derer eine Entformung möglich ist.

Nach Optimieren der Parameterwerte für die einzelnen Hauptkenngrößen kann der Wert für die Modellantwort bei diesen optimierten Parameterwerten bestimmt werden.

In einem letzten Schritt werden schließlich die berechneten optimierten Parameterwerte der Hauptkenngrößen als entsprechende Startparameterwerte an einer realen Spritzgussmaschine eingestellt. Somit werden die Optimierungsergebnisse letztlich im Realfall getestet und gegebenenfalls noch fein justiert.

## Patentansprüche

1. Computerimplementiertes Verfahren zum Optimieren eines Spritzgussprozesses zur Herstellung dickwandiger Bauteile auf Grundlage eines auf Basis von vorzugebenden Parametern parametrisierten Modells, wobei ein herzustellendes Bauteil mit einer Bauteil-Geometrie in dem Modell abgebildet wird, und das Verfahren mindestens die folgenden Schritte aufweist:
a) Festlegen einer Gruppe von Parametern als Hauptkenngrößen auf Basis eines relativen Einflusses der Parameter auf eine vorgegebene Modellantwort und
b) Festlegen von Parameterwerten für die Hauptkenngrößen als Startwerte für ein nachfolgendes Optimieren des Modells und von jeweiligen Toleranzbereichen für die Hauptkenngrößen,
c) Optimieren der Parameterwerte der einzelnen Hauptkenngrößen hinsichtlich eines angestrebten Wertes der Modellantwort in den jeweiligen Toleranzbereichen ausgehend von den Startwerten aus Schritt a),
d) Einstellen der optimierten Parameterwerte aus Schritt c) als entsprechende Startparameterwerte an einer Spritzgussmaschine.

2. Verfahren nach Anspruch 1, wobei das Verfahren noch umfasst:
al) für die einzelnen Parameter jeweiliges Bestimmen eines Wertes für die vorgegebene Modellantwort bei verschiedenen Parameterwerten des jeweiligen Parameters und eines daraus resultierenden relativen Einflusses der einzelnen Parameter auf den Wert für die Modellantwort, wobei in Schritt a) das Festlegen der Gruppe von Parametern als Hauptkenngrößen auf Basis des so bestimmten relativen Einflusses der einzelnen Parameter erfolgt, und
b1) Bestimmen einer Korrelation der Hauptkenngrößen in Bezug auf den Wert für die Modellantwort für verschiedene Parameterwerte der einzelnen Hauptkenngrößen, wobei in Schritt b) das Festlegen der Parameterwerte für die Hauptkenngrößen als Startwerte für das nachfolgende Optimieren des Modells und der jeweiligen Toleranzbereiche für die Hauptkenngrößen auf Basis der so bestimmten Korrelation erfolgt, wobei a1) vor a) und b1) nach a) durchzuführen ist.

3. Verfahren nach Anspruch 1 oder 2, wobei die Bauteil-Geometrie eine Schichtdicke und eine Anzahl von Schichten umfasst.

4. Verfahren nach Anspruch 1, 2 oder 3, wobei der angestrebte Wert der Modellantwort einem Extremalwert, insbesondere einem Maximum oder Minimum der Modellantwort entspricht.

5. Verfahren nach einem der voranstehenden Ansprüche, wobei das Verfahren, unter Beibehaltung der festgelegten Startwerte für die Hauptkenngrößen, ferner folgenden Schritt umfasst:
b2) Bestimmen einer Korrelation der verbleibenden Parameter in Bezug auf den Wert für die Modellantwort für verschiedene Parameterwerte der einzelnen verbleibenden Parameter und daraus Festlegen von Parameterwerten für die verbleibenden Parameter als Startwerte für das nachfolgende Optimieren des Modells und jeweiliger Toleranzbereiche für die verbleibenden Parameter,
c1) Optimieren der Parameterwerte der verbleibenden Parameter hinsichtlich des angestrebten Wertes der Modellantwort in den jeweiligen Toleranzbereichen ausgehend von den Startwerten aus Schritt b) und b2), wobei Schritt b2) nach Schritt b) und vor Schritt c) und Schritt c1) zusammen mit Schritt c) auszuführen ist.

6. Verfahren nach einem der voranstehenden Ansprüche, wobei das Verfahren ferner folgenden Schritt aufweist:
c2) Bestimmen des Wertes für die Modellantwort für die optimierten Parameterwerte.

7. Verfahren nach einem der voranstehenden Ansprüche, wobei die vorzugebenden Parameter ausgewählt werden aus einer Gruppe bestehend aus Bauteil-Geometrieparameter, wie Schichtdicke, Schichtanzahl, aus Spritzgussparametern, wie Werkzeugtemperaturen, Schmelztemperaturen, Spritzgussprozesseinstellungen, Drücke, Kühlzeiten, Kühlraten an Werkzeugwand, Einspritzprofil, Umschaltpunkt, Nachdruckprofil, aus Materialeigenschaften, wie Wärmekapazität, Wärmeleitfähigkeit, Wärmeausdehnung, Glaspunkt, Erstarrungstemperatur, Schmelztemperatur, Viskosität, Dichte, und aus weiteren physikalischen Einflüssen wie Gravitation und Massenträgheit.

8. Verfahren nach Anspruch 7, wobei die vorzugebenden Parameter in Abhängigkeit einer weiteren Größe wie Temperatur, Zeit oder einer anderen frei wählbaren Feldgröße vorgegeben werden.

9. Verfahren nach einem der Ansprüche 2 bis 8, wobei beim für die einzelnen Parameter jeweiligen Bestimmen des Wertes für die Modellantwort für einen jeweiligen Parameter 1 bis 5 Parameterwerte, insbesondere 2 Parameterwerte, insbesondere ein Minimal- und ein Maximalwert angegeben werden.

10. Verfahren nach einem der voranstehenden Ansprüche, wobei als Hauptkenngrößen 1 bis 5 Parameter, beginnend mit dem Parameter mit dem größten relativen Einfluss und bei mehr als einem Parameter fortfahrend mit den hinsichtlich des relativen Einflusses unmittelbar sich anschließenden Parametern, festgelegt werden.

11. Verfahren nach einem der Ansprüche 2 bis 10, wobei das in Schritt a1) durchgeführte Bestimmen des jeweiligen relativen Einflusses der einzelnen Parameter auf den Wert für die Modellantwort durch eine graphische Auswertung erfolgt.

12. Verfahren nach einem der Ansprüche 2 bis 11, wobei in Schritt b1) beim Bestimmen einer Korrelation der Hauptkenngrößen in Bezug auf den Wert für die Modellantwort für verschiedene Parameterwerte der einzelnen Hauptkenngrößen jeweils 3 bis 10 verschiedene Parameterwerte für die einzelnen Hauptkenngrößen verwendet werden.

13. Verfahren nach einem der voranstehenden Ansprüche, wobei beim Optimieren in Schritt c) Randbedingungen festgelegt werden, die zu erfüllen sind.

14. Verfahren nach einem der voranstehenden Ansprüche, bei dem die Modellantwort aus der Gruppe bestehend aus maximaler Temperatur im Bauteil, Gesamtdauer des Spritzgussprozesses, Dauer bis zum frühestmöglichen Zeitpunkt für eine Entformung vorgegeben wird.

15. Computerprogramm mit Programmcode, der dazu geeignet ist, ein Verfahren nach einem der Ansprüche 1 bis 14 auszuführen, wenn das Computerprogramm auf einer entsprechenden Recheneinrichtung abläuft.
